# EUROPEAN PATENT APPLICATION

(11) **EP 4 815 570 A1**
(43) Date of publication of application: **30.09.2026**
(21) Application number: 23959216.5
(22) Date of filing: 23.11.2023
(51) Int. Cl.: H04W 48/16

(54) **METHOD FOR SENSING AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: WANG, Yaxin, Dongguan, Guangdong 523860 (CN); GUO, Yali, Dongguan, Guangdong 523860 (CN)
(74) Representative: RGTH
(86) International application number: PCT/CN2023/133669
(87) International publication number: WO 2025/107245

(57) **Abstract**

Provided are a method for sensing and a communication device. The method comprises: a first network element sends a first message to an application function network element, the first message being used to request sensing data of a target device associated with a first communication device, and the target device being a non-3GPP sensing device.

## Description

### TECHNICAL FIELD

This application relates to the field of communications technologies, and more specifically, to a method for sensing and a communications device.

### BACKGROUND

To enrich sensing means, in integrated sensing and communication scenarios, it is currently considered to support sensing data generated by non-3rd generation partnership project (3GPP) sensing devices. However, how to transmit the sensing data generated by non-3GPP sensing devices is a problem that needs to be resolved.

### SUMMARY

This application provides a method for sensing and a communications device. Various aspects involved in this application are described below.

According to a first aspect, a method for sensing is provided, including: sending, by a first network element, a first message to an application function network element, where the first message is used to request sensing data obtained by a target device associated with a first communications device, and the target device is a non-3GPP sensing device.

According to a second aspect, a method for sensing is provided, including: receiving, by an application function network element, a first message sent by a first network element, where the first message is used to request sensing data obtained by a target device associated with a first communications device, and the target device is a non-3GPP sensing device.

According to a third aspect, a method for sensing is provided, including: sending, by a first communications device, a fourth message to an application function network element, where the fourth message includes device information of a target device associated with the first communications device, and the target device is a non-3GPP sensing device.

According to a fourth aspect, a communications device is provided, where the communications device is a first network element, and the communications device includes: a first communications module, configured to send a first message to an application function network element, where the first message is used to request sensing data obtained by a target device associated with a first communications device, and the target device is a non-3GPP sensing device.

According to a fifth aspect, a communications device is provided, where the communications device is an application function network element, and the communications device includes: a first communications module, configured to receive a first message sent by a first network element, where the first message is used to request sensing data obtained by a target device associated with a first communications device, and the target device is a non-3GPP sensing device.

According to a sixth aspect, a communications device is provided, where the communications device is a first communications device, and the communications device includes: a first communications module, configured to send a fourth message to an application function network element, where the fourth message includes device information of a target device associated with the first communications device, and the target device is a non-3GPP sensing device.

According to a seventh aspect, a communications device is provided, including a transceiver, a memory, and a processor, where the memory is configured to store a program, the processor is configured to invoke the program from the memory, and control the transceiver to receive or send a signal, so that the communications device executes the method according to any one of the first aspect to the third aspect.

According to an eighth aspect, an apparatus is provided, and the apparatus includes a processor, configured to invoke a program from a memory, to cause the apparatus to execute the method according to any one of the first aspect to the third aspect.

According to a ninth aspect, a chip is provided, and the chip includes a processor, configured to invoke a program from a memory, to cause a device on which the chip is installed to execute the method according to any one of the first aspect to the third aspect.

According to a tenth aspect, a computer-readable storage medium is provided, where the computer-readable storage medium stores a program, and the program causes a computer to execute the method according to any one of the first aspect to the third aspect.

According to an eleventh aspect, a computer program product is provided, including a program, where the program causes a computer to execute the method according to any one of the first aspect to the third aspect.

According to a twelfth aspect, a computer program is provided. The computer program causes a computer to execute the method according to any one of the first aspect to the third aspect.

Embodiments of this application propose requesting sensing data obtained by a non-3GPP sensing device associated with a first communications device from an application function network element. Because data interaction between the application function network element and the first communications device can be protected at the application layer, transmitting non-3GPP sensing data through the application function network element can enhance data transmission security.

### BRIEF DESCRIPTION OF DRAWINGS

FIG. 1 is an example diagram of a system architecture of a wireless communications system to which embodiments of this application are applicable.
FIG. 2 is a system architecture diagram of a 5th generation (5G) communications system.
FIG. 3 is an example diagram of another communications system architecture provided by an embodiment of this application.
FIG. 4 is a schematic flowchart of a method for sensing provided by an embodiment of this application.
FIG. 5 is a schematic flowchart of a method for sensing provided by another embodiment of this application.
FIG. 6 is a schematic flowchart of a method for sensing provided by yet another embodiment of this application.
FIG. 7 is a schematic flowchart of a method for sensing provided by yet another embodiment of this application.
FIG. 8 is a schematic flowchart of a method for sensing provided by yet another embodiment of this application.
FIG. 9 is a schematic structural diagram of a communications device provided by an embodiment of this application.
FIG. 10 is a schematic structural diagram of a communications device provided by another embodiment of this application.
FIG. 11 is a schematic structural diagram of a communications device provided by yet another embodiment of this application.
FIG. 12 is a schematic diagram of an apparatus to which an embodiment of this application is applicable.

### DESCRIPTION OF EMBODIMENTS

Technical solutions in this application are described below with reference to the accompanying drawings.

### Wireless communications system

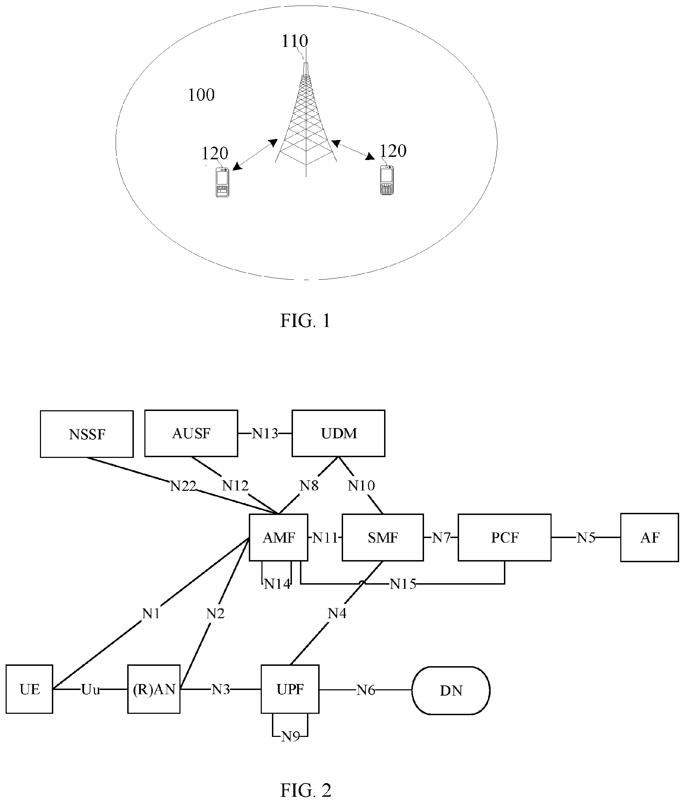

FIG. 1 is an example diagram of a system architecture of a wireless communications system 100 to which embodiments of this application are applicable. The wireless communications system 100 may include a network device 110 and a terminal device 120. The network device 110 may be a device that communicates with the terminal device 120. The network device 110 may provide network coverage for a specific geographical area, and may communicate with the terminal device 120 within the coverage area. The terminal device 120 may access a network (for example, a wireless network) by using the network device 110. Optionally, the wireless communications system 100 may further include other network entities such as a network controller and a mobility management entity, which are not limited in embodiments of this application.

It should be understood that the technical solutions in embodiments of this application may be applied to various communications systems, for example, a 5G system or new radio (NR), a long term evolution (LTE) system, an LTE frequency division duplex (FDD) system, an LTE time division duplex (TDD) system, and the like. The technical solutions provided in this application may further be applied to a future communications system, such as a 6th generation mobile communications system or a satellite communications system.

The terminal device in embodiments of this application may also be referred to as a user equipment (UE), an access terminal, a subscriber unit, a subscriber station, a mobile site, a mobile station (MS), a mobile terminal (MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone, a tablet computer (Pad), a notebook computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Optionally, the terminal device may be configured to serve as a base station. For example, a terminal device may act as a scheduling entity that provides a sidelink signal between terminal devices in vehicle to everything (V2X) or device to device (D2D). For example, a cellular phone and a vehicle communicate with each other through a sidelink signal. A cellular phone and a smart home device communicate with each other, without relaying a communication signal through a base station.

The network device in embodiments of this application may be a device configured to communicate with the terminal device. The network device may be, for example, an access network device or a wireless access network device. For example, the network device may be a base station. The base station may broadly cover various names in the following, or be replaced with the following names: NodeB, evolved NodeB (eNB), next generation NodeB (gNB), relay station, access point, transmitting and receiving point (TRP), transmitting point (TP), home base station, network controller, access node, wireless node, access point (AP), transmission node, transceiver node, base band unit (BBU), remote radio unit (RRU), active antenna unit (AAU), remote radio head (RRH), central unit (CU), distributed unit (DU), positioning node, etc. The base station may be a macro base station, a micro base station, a relay node, a donor node, or the like, or a combination thereof.

Terminal devices may communicate with each other through a sidelink. Sidelink communication may also be referred to as proximity services (ProSe) communication, unilateral communication, side-link communication, or D2D communication.

### 5G Network System Architecture and Sensing Network Element

The 5G network system architecture is shown in FIG. 2. In this system architecture, the UE establishes an access stratum connection with an access node (AN) via the air interface (Uu interface) to exchange access stratum messages and wireless data transmission. The UE has a non-access stratum (NAS) connection with the access and mobility management function (AMF) via the N1 interface to exchange NAS messages. In addition to mobility management for the UE, the AMF is also responsible for forwarding session management-related messages between the UE and the SMF. The policy control function (PCF) is responsible for formulating policies related to mobility management, session management, billing, etc., for the UE. The user plane function (UPF) performs data transmission with an external data network (DN) via the N6 interface and with the AN via the N3 interface.

Current cellular networks (including 5G networks) are mainly used for wireless data transmission and communication. However, the wireless electromagnetic wave signals used by cellular networks can not only be used for wireless data transmission and communication but also have environmental sensing capabilities. For example, the wireless electromagnetic wave signals of cellular networks can be used for user action or gesture recognition, respiration monitoring, terminal device movement speed measurement, environmental imaging, weather monitoring, etc. Therefore, cellular networks can further be used for acquiring sensing information.

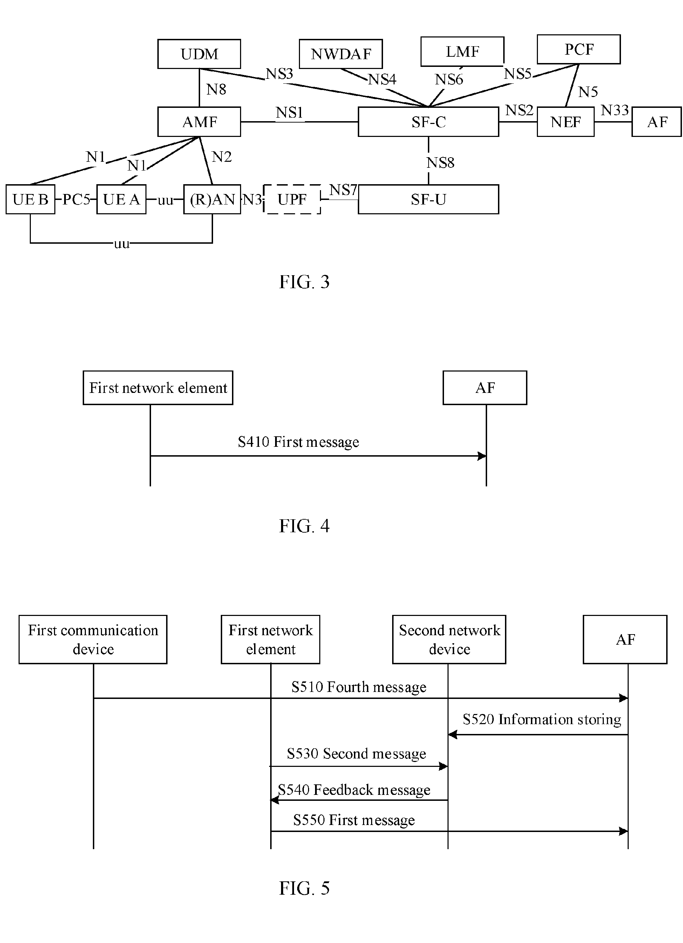

Currently, it is discussed to support sensing capabilities in B5G (beyond 5G) networks. For example, sensing capabilities can be supported in 3GPP networks by adding sensing network elements (or sensing control network elements) and corresponding procedures. FIG. 3 shows an example of a network system architecture supporting sensing capabilities. As shown in FIG. 3, a sensing network element (i.e., the sensing function (SF) in FIG. 3) is added to the core network to handle sensing-related operations. After an application sends a sensing request to the core network of the 3GPP network, the core network can select the correct base station or auxiliary terminal device through the sensing network element or the AMF, and trigger that base station or auxiliary terminal device to enable sensing-related wireless measurement capabilities, to initiate sensing information measurement and generate sensing results.

The main sensing links or sensing methods in integrated communication and sensing scenarios include the following:
1. Base station echo sensing link (single base station sensing): The base station transmits a sensing signal and receives the echo signal;
2. Inter-base station sensing link (BS-BS sensing): Base station B receives the sensing signal transmitted by base station A;
3. Air interface uplink sensing link (UE-BS uplink sensing): The base station receives the sensing signal transmitted by the terminal;
4. Air interface downlink sensing link (UE-BS downlink sensing): The terminal device receives the sensing signal transmitted by the base station;
5. Terminal echo sensing link (single terminal device sensing): The terminal device transmits a sensing signal and receives the echo signal; and
6. Inter-terminal sensing link (UE-UE sensing): Terminal device B receives the sensing signal transmitted by terminal device A.

Currently, considering the large amount of interaction data between the terminal device and the sensing network element, the terminal device can perform data transmission with the sensing network element via the user plane to complete the necessary interactions for a sensing service. For example, the terminal device can send sensing data to the sensing network element via the UPF by establishing a protocol data unit (PDU) session (which may be a special PDU session). Taking the sensing network element as the SF shown in FIG. 3 as an example, in some implementations, the sensing network element may include SF-C (the control plane network element of the SF) and SF-U (the user plane network element of the SF). The terminal device can, for example, send sensing data to the SF-U via the UPF. Of course, SF, SF-C, and SF-U are only examples of the names of this network element; this network element may also use other names, or it may be integrated with the location management function (LMF), which is not specifically limited in the embodiments of this application. Meanwhile, for some sensing tasks, to save network resources, sensing nodes may be allowed to perform partial processing, transmitting only a small amount of data to the SF via the control plane for processing. At the same time, considering scenarios that may require multi-terminal device-assisted sensing, terminal devices are allowed to discover and select other terminal devices via the PC5 interface and use those other terminal devices as sensing nodes to complete sensing tasks.

To enrich sensing means, it is currently considered to support non-3GPP sensing devices to provide sensing data based on 3GPP sensing devices. For example, non-3GPP sensing devices attached to access network nodes or terminal devices, such as cameras, microphones, radars, gyroscopes, etc., can be used for assisted sensing to provide sensing data. In such scenarios, how the core network (e.g., the network element that is in a core network and is used for a sensing service) obtains sensing data generated by such non-3GPP sensing devices is a problem that needs to be solved. To address this problem, one possible solution is that the core network directly obtains non-3GPP sensing data from the terminal device or access network device. However, this data acquisition method is insecure (because data interaction between the core network and the access network device or terminal device does not require user permission) and may cause user privacy leakage. Therefore, this method is difficult to commercialize.

Therefore, how to securely transmit non-3GPP sensing data is a concern of the embodiments of this application. To address the above problem, the embodiments of this application propose that the terminal device performs permission and registration of non-3GPP sensing devices at the application layer, and then interacts with the core network through an application function (AF) network element, thereby selectively and securely sending sensing data collected by non-3GPP sensing devices to the core network to complete sensing tasks. The processing flow and method for non-3GPP sensing data provided by the embodiments of this application are described in detail below with reference to the accompanying drawings.

Referring to FIG. 4, in step S410, a first network element sends a first message to an AF.

The first network element may be a network element that is in a core network and is used for a sensing service. For example, the first network element may be the SF mentioned earlier. Alternatively, the first network element may be an LMF (i.e., the SF and the LMF are integrated together).

The first message is used to request sensing data obtained by a target device associated with a first communications device. The first communications device may be a 3GPP sensing device. For example, the first communications device may be a terminal device or an access network device. The target device associated with the first communications device is a non-3GPP sensing device. For example, the target device includes one or more of devices attached to the first communications device, such as a camera, microphone, radar, gyroscope, etc.

In some implementations, the first message may include one or more of the following:
identification information of the first communications device;
device information of the target device; or
sensing time information.

For example, the first message may include identification information of the first communications device. The identification information of the first communications device may be a common UE ID, such as a subscription permanent identifier (SUPI) or a generic public subscription identifier (GPSI). Alternatively, the identification information of the first communications device may be the internet protocol (IP) address/medium access control (MAC) address, etc., of the first communications device.

As another example, the first message may include device information of the target device. The device information of the target device may include identification information of the target device and/or type information of the target device. The identification information of the target device (also referred to as recognition information of the target device) may include one or more of the following information: a manufacturer of the target device, a MAC address, or a device serial number. The type information of the target device may, for example, indicate that the target device is a camera, gyroscope, microphone, etc.

As another example, the first message may include sensing time information. The sensing time information is used to indicate the execution time of the sensing task, so that the AF can return sensing data within the corresponding time to the first network element.

After the first network element sends the first message to the AF, in some implementations, the first network element may receive sensing data which is obtained by the target device and is sent by the AF. For example, after receiving the first message, the AF may collect non-3GPP sensing data from the first communications device through the application layer (or application server). Then, the AF may feed back this non-3GPP sensing data to the SF via the control plane or user plane.

Before the first network element sends the first message to the AF, the first network element may first determine the AF, or determine identification information of the AF. The identification information of the AF may include one or more of the following: an ID of the AF, an ID of the application, address information of the AF, or a fully qualified domain name (FQDN) of the AF. There may be multiple ways for the first network element to determine the AF or the identification information of the AF. Two possible implementation methods are given below in conjunction with Embodiment 1 and Embodiment 2.

### Embodiment 1: Querying the AF through a second network element in the core network

Referring to FIG. 5, in step S530, the first network element sends a second message to a second network element in the core network. The second message is used to determine (or query for) the AF (the AF corresponding to the first communications device). The second network element may be, for example, a network repository function (NRF) or a unified data repository (UDR). The second network element may record the correspondence between the first communications device and the AF. For example, the second network element may record the correspondence between the identification information of the first communications device and the identification information of the AF.

The second message may include identification information of the first communications device. The identification information of the first communications device may be a common UE ID, such as SUPI or GPSI. Alternatively, the identification information of the first communications device may be the IP address/MAC address, etc., of the first communications device.

The second message may include first indication information. The first indication information is used to indicate a non-3GPP sensing manner. It should be understood that the first indication information may explicitly indicate the non-3GPP sensing manner, or may implicitly indicate the non-3GPP sensing manner. For example, the first indication information includes a first value and a second value. If the value of the first indication information is the first value, the first indication information is used to indicate the non-3GPP sensing manner; if the value of the first indication information is the second value, the first indication information is used to indicate a 3GPP sensing method. As another example, the first indication information may be identification information and/or type information of the target device. That is, by sending the identification information and/or type information of the target device, the first network element implicitly indicates the non-3GPP sensing manner.

Continuing to refer to FIG. 5, in some implementations, FIG. 5 may further include step S540, in which the first network element receives a feedback message for the second message from the second network element. The feedback message includes identification information of the AF. The identification information of the AF may include one or more of the following: an ID of the AF, an ID of the application, address information of the AF, or an FQDN of the AF.

Furthermore, the feedback message may also include one or more of the following: identification information of the first communications device or device information of the target device. The identification information of the first communications device may be a common UE ID, such as SUPI or GPSI. Alternatively, the identification information of the first communications device may be the IP address/MAC address, etc., of the first communications device. The device information of the target device may include identification information of the target device and/or type information of the target device. The identification information of the target device (also referred to as recognition information of the target device) may include one or more of the following information: a manufacturer of the target device, a MAC address, or a device serial number. The type information of the target device may, for example, indicate that the target device is a camera, gyroscope, microphone, etc.

After determining the AF (the identification information of the AF), the first network element proceeds to step S550, sending the first message to the AF (sending the first message to the AF according to the identification information of the AF). Step S550 in FIG. 5 corresponds to step S410 in FIG. 4, referring to the related introduction of step S410 for details, which will not be repeated here.

It should be understood that the first network element and the second network element may interact directly or through an intermediate network element. For example, the first network element and the second network element may interact through one or more network elements among the AMF, GMLC, and NEF.

Optionally, before step S530, the first communications device may first execute step S510, i.e., sending a fourth message to the AF.

In some implementations, the fourth message includes one or more of the following: identification information of the first communications device, or device information of the target device. The identification information of the first communications device may be a common UE ID, such as SUPI or GPSI. Alternatively, the identification information of the first communications device may be the IP address/MAC address, etc., of the first communications device. The device information of the target device may include identification information of the target device and/or type information of the target device. The identification information of the target device (also referred to as recognition information of the target device) may include one or more of the following information: a manufacturer of the target device, a MAC address, or a device serial number. The type information of the target device may, for example, indicate that the target device is a camera, gyroscope, microphone, etc.

In some implementations, the fourth message is used to register the device information of the target device with the AF (or application server). That is, through the fourth message, the first terminal device registers the device information of the non-3GPP sensing device associated with the first terminal device with the AF, thereby preparing for subsequent acquisition of non-3GPP sensing data.

After receiving the fourth message, the AF may store one or more of the following information to the second network element in the core network: identification information of the first communications device, device information of the target device, or identification information of the AF. The identification information of the first communications device may be a common UE ID, such as SUPI or GPSI. Alternatively, the identification information of the first communications device may be the IP address/MAC address, etc., of the first communications device. The device information of the target device may include identification information of the target device and/or type information of the target device. The identification information of the target device (also referred to as recognition information of the target device) may include one or more of the following information: a manufacturer of the target device, a MAC address, or a device serial number. The type information of the target device may, for example, indicate that the target device is a camera, gyroscope, microphone, etc. The identification information of the AF may include one or more of the following: an ID of the AF, an ID of the application, address information of the AF, or an FQDN of the AF.

### Embodiment 2: Learning about the AF through the first communications device

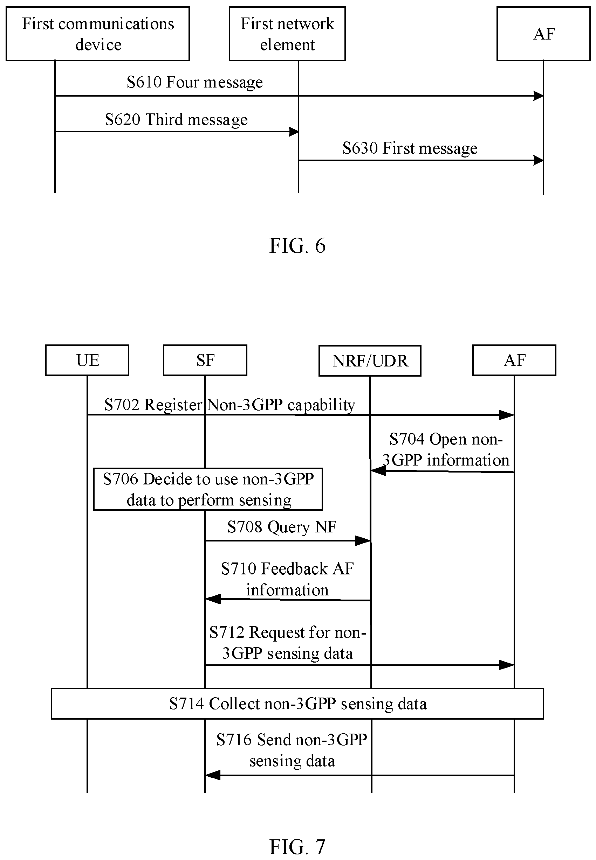

Referring to FIG. 6, in step S620, the first communications device sends a third message to the first network element.

In some implementations, the third message can be used to register the non-3GPP sensing capability of the first communications device with the first network element.

In some implementations, the third message may include one or more of the following: identification information of the first communications device, device information of the target device, or identification information of the AF. The identification information of the first communications device may be a common UE ID, such as SUPI or GPSI. Alternatively, the identification information of the first communications device may be the IP address/MAC address, etc., of the first communications device. The device information of the target device may include identification information of the target device and/or type information of the target device. The identification information of the target device (which may also be referred to as recognition information of the target device) may include one or more of the following information: a manufacturer of the target device, a MAC address, or a device number. The type information of the target device may, for example, indicate that the target device is a camera, gyroscope, microphone, etc. The identification information of the AF may include one or more of the following: an ID of the AF, an ID of the application, address information of the AF, or an FQDN of the AF.

After determining the AF (identification information of the AF), the first network element proceeds to step S630, sending the first message to the AF (sending the first message to the AF based on the identification information of the AF). Step S630 corresponds to step S410 in FIG. 4, referring to the related description of step S410 for details, which will not be repeated here.

Optionally, before step S630, the first communications device may first perform step S610, i.e., sending a fourth message to the AF.

In some implementations, the fourth message includes one or more of the following: identification information of the first communications device, or device information of the target device. The identification information of the first communications device may be a common UE ID, such as SUPI or GPSI. Alternatively, the identification information of the first communications device may be the IP address/MAC address, etc., of the first communications device. The device information of the target device may include identification information of the target device and/or type information of the target device. The identification information of the target device (which may also be referred to as recognition information of the target device) may include one or more of the following information: a manufacturer of the target device, a MAC address, or a device number. The type information of the target device may, for example, indicate that the target device is a camera, gyroscope, microphone, etc.

In some implementations, the fourth message is used to register the device information of the target device with the AF (or application server). That is, the first terminal device registers the device information of the non-3GPP sensing device associated with the first terminal device to the AF via the fourth message, thereby preparing for subsequent acquisition of non-3GPP sensing data.

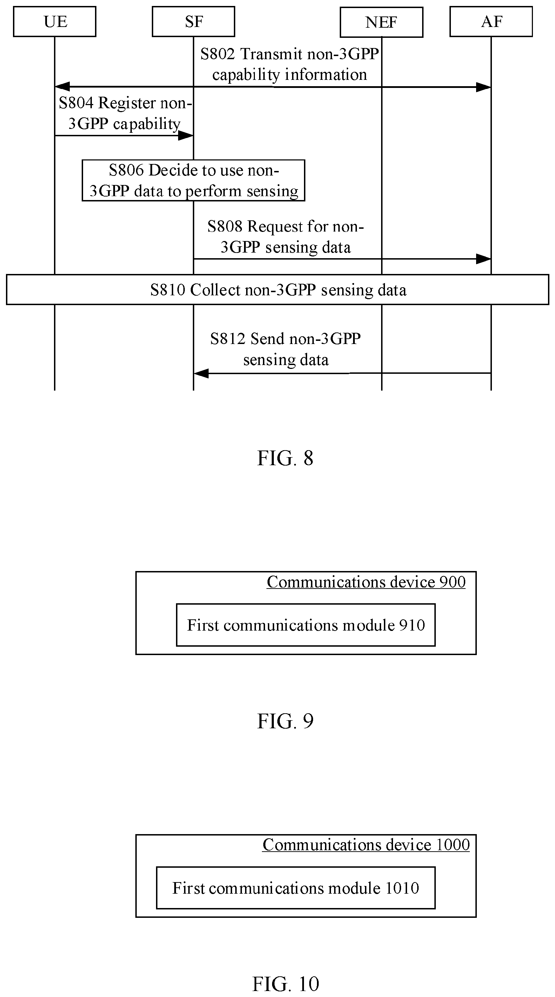

The following describes the embodiments of this application in more detail with specific examples. The SF in the examples shown in FIGs. 7 and 8 corresponds to the first network element mentioned earlier, the NRF/UDR corresponds to the second network element mentioned earlier, and the UE corresponds to the first terminal device mentioned earlier. It should be noted that the examples shown in FIGs. 7 and 8 are only intended to help those skilled in the art understand the embodiments of this application, and are not intended to limit the embodiments of this application to the specific numerical values or specific scenarios illustrated. Based on the examples given in FIGs. 7 and 8, those skilled in the art can make various equivalent modifications or changes, and such modifications or changes also fall within the scope of the embodiments of this application.

### Example 1

In Example 1, the AF will perform registration management of non-3GPP sensing devices through the NRF/UDR. The UE registers its ID and the information of the associated non-3GPP sensing device to the application server via the application layer. The application server stores the relevant information on the NRF/UDR through the AF. When the SF decides to use non-3GPP sensing data, it can query the NRF/UDR to learn how to interact with the AF, and then request relevant non-3GPP sensing data from the AF. The following describes Example 1 in detail with reference to FIG. 7.

Referring to FIG. 7, in step S702, the UE registers, with the application server via the application layer, the information of the non-3GPP sensing device associated with the UE. This registration message may include the UE ID (which may be SUPI, GPSI, UE IP/MAC address information, etc.), and type information of the non-3GPP sensing device (such as camera, gyroscope, microphone, etc.). Optionally, this registration message may also include identification information of the non-3GPP sensing device, such as a product manufacturer, a MAC address, or a device number, etc.

In step S704, after receiving the non-3GPP sensing device information from the UE, the application server stores the relevant information on the NRF or UDR through the AF, for example, storing the ID information of the UE and the device information of the non-3GPP sensing device. The device information of the non-3GPP sensing device may include the device type, identification information, etc., of the non-3GPP sensing device. In addition, identification information of the AF may also be stored on the NRF or UDR, such as the ID of the AF, an application ID, address information of the AF, an FQDN of the AF. The AF may store the above information on the NRF/UDR through an intermediate network element such as the NEF.

In step S706, the SF decides to use non-3GPP sensing data for sensing upon receiving a sensing request or in a process of providing a sensing service.

In step S708, the SF queries the NRF/UDR based on the information of the UE currently performs sensing (i.e., the network function (NF) query in FIG. 7). The query message may include the ID information of the UE, and indication information of a non-3GPP sensing manner (this indication information may be explicit indication information, or implicit indication information such as device type information of the non-3GPP sensing device). The SF may query the NRF/UDR through a network element such as AMF/GMLC/NEF.

In step S710, the NRF/UDR provides corresponding AF information (such as identification information of the AF) to the SF. In addition, the NRF/UDR may also provide the ID information of the UE and the device information of the non-3GPP sensing device associated with the UE. The information may be sent to the SF through a network element such as AMF/GMLC/NEF.

In step S712, the SF requests sensing data obtained by the non-3GPP sensing device associated with the UE from the corresponding AF based on the AF information. This request message may, for example, include the ID information of the UE, and device information of a specified non-3GPP sensing device. In addition, this request message may also include sensing time information.

In step S714, the AF collects non-3GPP sensing data from the UE via the application layer.

In step S716, the AF provides non-3GPP sensing data to the SF via the control plane or user plane. For example, the AF may establish a user plane connection with the SF in step S712 and transmit the non-3GPP sensing data through this user plane connection.

In Example 1, information related to non-3GPP sensing is stored on the NRF/UDR by the AF. When non-3GPP sensing is needed, the SF requests non-3GPP sensing data from the AF, thereby adding application-layer protection for the transmission of non-3GPP sensing data to the core network, which can better protect user privacy.

### Example 2:

In Example 2, the identification information of the AF is provided by the UE to the SF. For example, the UE obtains the identification information of the corresponding AF in the process of registering its own non-3GPP sensing device information with the application server. Subsequently, when the UE interacts with the SF, the UE sends the identification information of the AF and its own non-3GPP sensing capability information to the SF. When the SF decides to use non-3GPP sensing data, it learns how to interact with the AF based on the identification information of the AF, and then requests relevant non-3GPP sensing data from the AF. The following describes Example 2 in detail with reference to FIG. 8.

Referring to FIG. 8, in step S802, the UE registers, with the application server via the application layer, the information of the non-3GPP sensing device associated with the UE. This registration message may include the UE ID (which may be SUPI, GPSI, UE IP/MAC address information, etc.), and type information of the non-3GPP sensing device (such as camera, gyroscope, microphone, etc.). Optionally, this registration message may also include identification information of the non-3GPP sensing device, such as a product manufacturer, a MAC address, or a device number, etc.

In step S804, after establishing a connection with the SF, the UE registers its non-3GPP sensing capability information with the SF. This non-3GPP sensing capability information includes the ID information of the UE and device information of the non-3GPP sensing device. The device information of the non-3GPP sensing device may include device type information, device identification information, etc. In addition, the UE may also send identification information of the AF to the SF, such as the ID of the AF, an application ID, address information of the AF, an FQDN of the AF, etc.

In step S806, the SF decides to use non-3GPP sensing data for sensing upon receiving a sensing request or in a process of providing a sensing service.

In step S808, the SF requests sensing data obtained by the non-3GPP sensing device associated with the UE from the corresponding AF based on the identification information of the AF. This request message may, for example, include the ID information of the UE, and device information of a specified non-3GPP sensing device. In addition, this request message may also include sensing time information.

In step S810, the AF collects non-3GPP sensing data from the UE via the application layer (possibly through the application server).

In step S812, the AF provides non-3GPP sensing data to the SF via the control plane or user plane. For example, the AF may establish a user plane connection with the SF in step S808 and transmit the non-3GPP sensing data through this user plane connection.

Different from Example 1, in Example 2, the UE directly registers non-3GPP sensing capability information with the SF, which is more convenient for core network management and has better timeliness. In addition, obtaining non-3GPP sensing data through the AF can provide privacy protection for sensitive data.

The foregoing describes method embodiments of this application in detail with reference to FIGs. 1 to 8. The following describes apparatus embodiments of this application in detail with reference to FIGs. 9 to 12. It should be understood that the descriptions of the method embodiments and the apparatus embodiments correspond to each other. Therefore, for parts not described in detail, reference may be made to the preceding method embodiments.

FIG. 9 is a schematic structural diagram of a communications device provided by an embodiment of this application. The communications device 900 in FIG. 9 may be the first network element mentioned earlier. The communications device 900 may include a first communications module 910.

The first communications module 910 is configured to send a first message to an application function network element. The first message is used to request sensing data obtained by a target device associated with a first communications device, where the target device is a non-3GPP sensing device.

In some implementations, the first message includes one or more of the following:
identification information of the first communications device;
device information of the target device; or
sensing time information.

In some implementations, the device information includes one or more of the following:
identification information of the target device; or
type information of the target device.

In some implementations, the communications device further includes:
a second communications module, configured to send a second message to a second network element in the core network before the first network element sends the first message to the application function network element, where the second message is used to determine the application function network element.

In some implementations, the second message includes one or more of the following:
identification information of the first communications device; or
first indication information, used to indicate a non-3GPP sensing manner.

In some implementations, the communications device further includes:
a third communications module, configured to receive a feedback message of the second message from the second network element, where the feedback message includes one or more of the following:
identification information of the first communications device;
device information of the target device; or
identification information of the application function network element.

In some implementations, the second network element is an NRF or UDR.

In some implementations, the communications device 900 further includes:
a fourth communications module, configured to receive a third message sent by the first communications device before the first network element sends the first message to the application function network element, where the third message includes one or more of the following:
identification information of the first communications device;
device information of the target device; or
identification information of the application function network element.

In some implementations, the third message is used to register the non-3GPP sensing capability of the first communications device with the first network element.

In some implementations, the communications device 900 further includes:
a fifth communications module, configured to receive sensing data which is obtained by the target device and is sent by the application function network element.

In some implementations, the first communications device is a terminal device or an access network device.

In some implementations, the first network element is a network element that is in the core network and is used for a sensing service.

FIG. 10 is a schematic structural diagram of another communications device provided by an embodiment of this application. The communications device 1000 in FIG. 10 may be the application function network element mentioned earlier, i.e., the AF. The communications device 1000 may include a first communications module 1010. The first communications module 1010 is configured to receive a first message sent by a first network element. The first message is used to request sensing data obtained by a target device associated with a first communications device, where the target device is a non-3GPP sensing device.

In some implementations, the first message includes one or more of the following:
identification information of the first communications device;
device information of the target device; or
sensing time information.

In some implementations, the device information includes one or more of the following:
identification information of the target device; or
type information of the target device.

In some implementations, the communications device 1000 further includes:
a second communications module, configured to receive a fourth message sent by the first communications device before the application function network element receives the first message sent by the first network element, where the fourth message includes one or more of the following:
identification information of the first communications device; or
device information of the target device.

In some implementations, the fourth message is used to register the device information of the target device with the application function network element.

In some implementations, the communications device 1000 further includes:
a third communications module, configured to store one or more of the following information to a second network element in the core network:
identification information of the first communications device;
device information of the target device; or
identification information of the application function network element.

In some implementations, the second network element is an NRF or UDR.

In some implementations, the communications device 1000 further includes:
a fourth communications module, configured to send sensing data obtained by the target device to the first network element.

In some implementations, the first communications device is a terminal device or an access network device.

In some implementations, the first network element is a network element that is in a core network and is used for a sensing service.

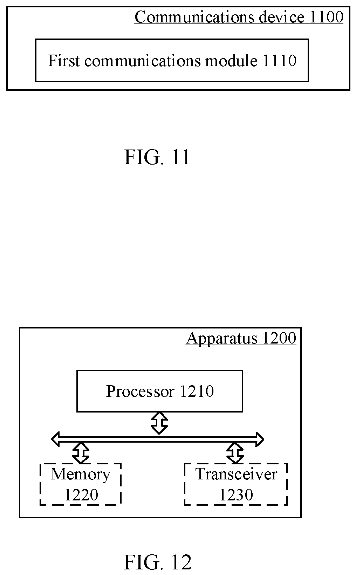

FIG. 11 is a schematic structural diagram of yet another communications device provided by an embodiment of this application. The communications device 1100 in FIG. 11 may be the first communications device mentioned earlier. The communications device 1100 may include a first communications module 1110. The first communications module 1110 is configured to send a fourth message to an application function network element, where the fourth message includes device information of a target device associated with the first communications device, and the target device is a non-3GPP sensing device.

In some implementations, the device information includes one or more of the following:
identification information of the target device; or
type information of the target device.

In some implementations, the fourth message further includes identification information of the first communications device.

In some implementations, the fourth message is used to register the device information of the target device with the application function network element.

In some implementations, the communications device 1100 further includes:
a second communications module, configured to send a third message to a first network element in the core network, where the third message includes one or more of the following:
identification information of the first communications device;
device information of the target device; or
identification information of the application function network element.

In some implementations, the third message is used to register a non-3GPP sensing capability of the first communications device with the first network element.

In some implementations, the first network element is a network element used for a sensing service.

In some implementations, the communications device 1100 further includes:
a third communications module, configured to send sensing data obtained by the target device to the application function network element.

In some implementations, the first communications device is a terminal device or an access network device.

FIG. 12 is a schematic structural diagram of a communications apparatus applicable to the embodiments of this application. The dashed lines in FIG. 12 indicate that the unit or module is optional. The apparatus 1200 may be configured to implement the methods described in the foregoing method embodiments. The apparatus 1200 may be a chip, a terminal device, or a network device.

The apparatus 1200 may include one or more processors 1210. The processor 1210 may support the apparatus 1200 in implementing the methods described in the foregoing method embodiments. The processor 1210 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA), or another programmable logic device, a discrete gate or transistor logic device, a discrete hardware component, or the like. The general-purpose processor may be a microprocessor, or the processor may be any conventional processor or the like.

The apparatus 1200 may further include one or more memories 1220. A program is stored on the memory 1220, and the program may be executed by the processor 1210, so that the processor 1210 executes the method described in the foregoing method embodiments. The memory 1220 may be separate from or integrated into the processor 1210.

The apparatus 1200 may further include a transceiver 1230. The processor 1210 may communicate with other devices or chips through the transceiver 1230. For example, the processor 1210 may send and receive data to and from other devices or chips through the transceiver 1230.

An embodiment of this application further provides a computer-readable storage medium, configured to store a program. The computer-readable storage medium may be applied to the first network element, the application function network element, or the first communications device provided in the embodiments of this application, and the program enables a computer to execute the method performed by the first network element, the application function network element, or the first communications device in the various embodiments of this application.

An embodiment of this application further provides a computer program product. The computer program product includes a program. The computer program product may be applied to the first network element, the application function network element, or the first communications device provided in the embodiments of this application, and the program enables a computer to execute the method performed by the first network element, the application function network element, or the first communications device in the various embodiments of this application.

An embodiment of this application further provides a computer program. The computer program may be applied to the first network element, the application function network element, or the first communications device provided in the embodiments of this application, and the computer program enables a computer to execute the method performed by the first network element, the application function network element, or the first communications device in the various embodiments of this application.

It should be understood that the terms "system" and "network" in this application may be used interchangeably. In addition, the terms used in this application are merely intended to explain specific embodiments of this application, and are not intended to limit this application. The terms "first", "second", "third", "fourth", and the like in the specification and claims of this application and the accompanying drawings are used to distinguish between different objects, rather than to describe a specific order. In addition, the terms "include" and "comprise" and any variations thereof are intended to cover a non-exclusive inclusion.

In embodiments of this application, "indicate" may be a direct indication, an indirect indication, or may indicate that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should also be understood that determining B based on A does not only mean that B is determined based on A only, but also means B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configuration" may be implemented by pre-storing corresponding code, tables, or other means that can be used to indicate related information in a device (for example, including a terminal device and a network device). This application does not limit the specific implementation manner thereof. For example, "predefined" may refer to being defined in a protocol.

In embodiments of this application, the "protocol" may refer to a standard protocol in the field of communications, for example, may include an LTE protocol, an NR protocol, and related protocols applied to future communications systems, which is not limited in this application.

In embodiments of this application, the term "and/or" is merely an association relationship describing associated objects, indicating that three relationships may exist. For example, A and/or B may indicate the following three cases: only A exists, both A and B exist, and only B exists. In addition, the character "/" in this specification generally indicates an "or" relationship between the associated objects.

In various embodiments of this application, the value of the sequence numbers of the foregoing processes do not mean the order of execution. The execution order of each process should be determined by its function and internal logic, and should not constitute any limitation on the implementation process of the embodiments of this application.

In the several embodiments provided in this application, it should be understood that the disclosed system, apparatus, and method may be implemented in other manners. For example, the described apparatus embodiments are merely illustrative. For example, the division of the units is merely a logical function division. In actual implementation, there may be another division manner. For example, multiple units or components may be combined or integrated into another system, or some features may be ignored or not performed. In addition, the displayed or discussed mutual couplings or direct couplings or communication connections may be implemented as indirect couplings or communication connections through some interfaces, apparatuses or units, and may be in electrical, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used for implementation, all or part of the embodiments may be implemented in the form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, coaxial cable, optical fiber, or digital subscriber line (DSL)) or wireless (for example, infrared, wireless, or microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), or a semiconductor medium (for example, a solid state disk (SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for sensing, comprising:
sending, by a first network element, a first message to an application function network element, wherein the first message is used to request sensing data obtained by a target device associated with a first communications device, and the target device is a non-3rd Generation Partnership Project 3GPP sensing device.

2. The method according to claim 1, wherein the first message comprises one or more of the following:
identification information of the first communications device;
device information of the target device; or
sensing time information.

3. The method according to claim 2, wherein the device information comprises one or more of the following:
identification information of the target device; or
type information of the target device.

4. The method according to any one of claims 1 to 3, wherein before the sending, by the first network element, the first message to the application function network element, the method further comprises:
sending, by the first network element, a second message to a second network element in a core network, wherein the second message is used to determine the application function network element.

5. The method according to claim 4, wherein the second message comprises one or more of the following:
identification information of the first communications device; or
first indication information, used to indicate a non-3GPP sensing manner.

6. The method according to claim 4 or 5, further comprising:
receiving, by the first network element, a feedback message of the second message from the second network element, wherein the feedback message comprises one or more of the following:
identification information of the first communications device;
device information of the target device; or
identification information of the application function network element.

7. The method according to any one of claims 4 to 6, wherein the second network element is a network repository function NRF or a unified data repository UDR.

8. The method according to any one of claims 1 to 3, wherein before sending, by the first network element, the first message to the application function network element, the method further comprises:
receiving, by the first network element, a third message sent by the first communications device, wherein the third message comprises one or more of the following:
identification information of the first communications device;
device information of the target device; or
identification information of the application function network element.

9. The method according to claim 8, wherein the third message is used to register a non-3GPP sensing capability of the first communications device with the first network element.

10. The method according to any one of claims 1 to 9, further comprising:
receiving, by the first network element, sensing data which is obtained by the target device and is sent by the application function network element.

11. The method according to any one of claims 1 to 10, wherein the first communications device is a terminal device or an access network device.

12. The method according to any one of claims 1 to 11, wherein the first network element is a network element that is in a core network and is used for a sensing service.

13. A method for sensing, comprising:
receiving, by an application function network element, a first message sent by a first network element, wherein the first message is used to request sensing data obtained by a target device associated with a first communications device, and the target device is a non-3rd Generation Partnership Project 3GPP sensing device.

14. The method according to claim 13, wherein the first message comprises one or more of the following:
identification information of the first communications device;
device information of the target device; or
sensing time information.

15. The method according to claim 14, wherein the device information comprises one or more of the following:
identification information of the target device; or
type information of the target device.

16. The method according to any one of claims 13 to 15, wherein before the receiving, by the application function network element, the first message sent by the first network element, the method further comprises:
receiving, by the application function network element, a fourth message sent by the first communications device, wherein the fourth message comprises one or more of the following:
identification information of the first communications device; or
device information of the target device.

17. The method according to claim 16, wherein the fourth message is used to register the device information of the target device with the application function network element.

18. The method according to claim 16 or 17, further comprising:
storing, by the application function network element, one or more of the following information to a second network element in a core network:
identification information of the first communications device;
device information of the target device; or
identification information of the application function network element.

19. The method according to claim 18, wherein the second network element is a network repository function NRF or a unified data repository UDR.

20. The method according to any one of claims 13 to 19, further comprising:
sending, by the application function network element, sensing data obtained by the target device to the first network element.

21. The method according to any one of claims 13 to 20, wherein the first communications device is a terminal device or an access network device.

22. The method according to any one of claims 13 to 21, wherein the first network element is a network element that is in a core network and is used for a sensing service.

23. A method for sensing, comprising:
sending, by a first communications device, a fourth message to an application function network element, wherein the fourth message comprises device information of a target device associated with the first communications device, and the target device is a non-3rd Generation Partnership Project 3GPP sensing device.

24. The method according to claim 23, wherein the device information comprises one or more of the following:
identification information of the target device; or
type information of the target device.

25. The method according to claim 23 or 24, wherein the fourth message further comprises identification information of the first communications device.

26. The method according to any one of claims 23 to 25, wherein the fourth message is used to register the device information of the target device with the application function network element.

27. The method according to any one of claims 23 to 26, further comprising:
sending, by the first communications device, a third message to a first network element in a core network, wherein the third message comprises one or more of the following:
identification information of the first communications device;
device information of the target device; or
identification information of the application function network element.

28. The method according to claim 27, wherein the third message is used to register a non-3GPP sensing capability of the first communications device with the first network element.

29. The method according to claim 27 or 28, wherein the first network element is a network element used for a sensing service.

30. The method according to any one of claims 23 to 29, further comprising:
sending, by the first communications device, sensing data obtained by the target device to the application function network element.

31. The method according to any one of claims 23 to 30, wherein the first communications device is a terminal device or an access network device.

32. A communications device, wherein the communications device is a first network element, and the communications device comprises:
a first communications module, configured to send a first message to an application function network element, wherein the first message is used to request sensing data obtained by a target device associated with a first communications device, and the target device is a non-3rd Generation Partnership Project 3GPP sensing device.

33. The communications device according to claim 32, wherein the first message comprises one or more of the following:
identification information of the first communications device;
device information of the target device; or
sensing time information.

34. The communications device according to claim 33, wherein the device information comprises one or more of the following:
identification information of the target device; or
type information of the target device.

35. The communications device according to any one of claims 32 to 34, wherein further comprising:
a second communications module, configured to send a second message to a second network element in a core network before the first network element sends the first message to the application function network element, wherein the second message is used to determine the application function network element.

36. The communications device according to claim 35, wherein the second message comprises one or more of the following:
identification information of the first communications device; or
first indication information, used to indicate a non-3GPP sensing manner.

37. The communications device according to claim 35 or 36, further comprising:
a third communications module, configured to receive a feedback message of the second message from the second network element, wherein the feedback message comprises one or more of the following:
identification information of the first communications device;
device information of the target device; or
identification information of the application function network element.

38. The communications device according to any one of claims 35 to 37, wherein the second network element is a network repository function NRF or a unified data repository UDR.

39. The communications device according to any one of claims 32 to 34, further comprising:
a fourth communications module, configured to receive a third message sent by the first communications device before the first network element sends the first message to the application function network element, wherein the third message comprises one or more of the following:
identification information of the first communications device;
device information of the target device; or
identification information of the application function network element.

40. The communications device according to claim 39, wherein the third message is used to register a non-3GPP sensing capability of the first communications device with the first network element.

41. The communications device according to any one of claims 32 to 40, further comprising:
a fifth communications module, configured to receive sensing data which is obtained by the target device and is sent by the application function network element.

42. The communications device according to any one of claims 32 to 41, wherein the first communications device is a terminal device or an access network device.

43. The communications device according to any one of claims 32 to 42, wherein the first network element is a network element that is in a core network and is used for a sensing service.

44. A communications device, wherein the communications device is an application function network element, and the communications device comprises:
a first communications module, configured to receive a first message sent by a first network element, wherein the first message is used to request sensing data obtained by a target device associated with a first communications device, and the target device is a non-3rd Generation Partnership Project 3GPP sensing device.

45. The communications device according to claim 44, wherein the first message comprises one or more of the following:
identification information of the first communications device;
device information of the target device; or
sensing time information.

46. The communications device according to claim 45, wherein the device information comprises one or more of the following:
identification information of the target device; or
type information of the target device.

47. The communications device according to any one of claims 44 to 46, further comprising:
a second communications module, configured to receive a fourth message sent by the first communications device before the application function network element receives the first message sent by the first network element, wherein the fourth message comprises one or more of the following:
identification information of the first communications device; or
device information of the target device.

48. The communications device according to claim 47, wherein the fourth message is used to register the device information of the target device with the application function network element.

49. The communications device according to claim 47 or 48, further comprising:
a third communications module, configured to store one or more of the following information to a second network element in a core network:
identification information of the first communications device;
device information of the target device; or
identification information of the application function network element.

50. The communications device according to claim 49, wherein the second network element is a network repository function NRF or a unified data repository UDR.

51. The communications device according to any one of claims 44 to 50, further comprising:
a fourth communications module, configured to send sensing data obtained by the target device to the first network element.

52. The communications device according to any one of claims 44 to 51, wherein the first communications device is a terminal device or an access network device.

53. The communications device according to any one of claims 44 to 52, wherein the first network element is a network element that is in a core network and is used for a sensing service.

54. A communications device, wherein the communications device is a first communications device, and the communications device comprises:
a first communications module, configured to send a fourth message to an application function network element, wherein the fourth message c device information of a target device associated with the first communications device, and the target device is a non-3rd Generation Partnership Project 3GPP sensing device.

55. The communications device according to claim 54, wherein the device information comprises one or more of the following:
identification information of the target device; or
type information of the target device.

56. The communications device according to claim 54 or 55, wherein the fourth message further comprises identification information of the first communications device.

57. The communications device according to any one of claims 54 to 56, wherein the fourth message is used to register the device information of the target device with the application function network element.

58. The communications device according to any one of claims 54 to 57, further comprising:
a second communications module, configured to send a third message to a first network element in a core network, wherein the third message comprises one or more of the following:
identification information of the first communications device;
device information of the target device; or
identification information of the application function network element.

59. The communications device according to claim 58, wherein the third message is used to register a non-3GPP sensing capability of the first communications device with the first network element.

60. The communications device according to claim 58 or 59, wherein the first network element is a network element used for a sensing service.

61. The communications device according to any one of claims 54 to 60, further comprising:
a third communications module, configured to send sensing data obtained by the target device to the application function network element.

62. The communications device according to any one of claims 54 to 61, wherein the first communications device is a terminal device or an access network device.

63. A communications device, comprising a transceiver, a memory, and a processor, wherein the memory is configured to store a program, the processor is configured to call the program from the memory and control the transceiver to receive or send a signal, so that the communications device performs the method according to any one of claims 1 to 12, 13 to 22, or 23 to 31.

64. An apparatus, comprising a processor, configured to call a program from a memory, so that the apparatus performs the method according to any one of claims 1 to 12, 13 to 22, or 23 to 31.

65. A chip, comprising a processor, configured to call a program from a memory, so that a device equipped with the chip performs the method according to any one of claims 1 to 12, 13 to 22, or 23 to 31.

66. A computer-readable storage medium, having a program stored thereon, wherein the program causes a computer to perform the method according to any one of claims 1 to 12, 13 to 22, or 23 to 31.

67. A computer program product, comprising a program, wherein the program causes a computer to perform the method according to any one of claims 1 to 12, 13 to 22, or 23 to 31.

68. A computer program, wherein the computer program causes a computer to perform the method according to any one of claims 1 to 12, 13 to 22, or 23 to 31.
